# EUROPEAN PATENT APPLICATION

(11) **EP 2 439 407 A2**
(43) Date of publication of application: **11.04.2012**
(21) Application number: 11182575.8
(22) Date of filing: 23.09.2011
(51) Int. Cl.: F03D 7/04

(54) **System, device, and method for automated monitoring and operation of wind turbines**

(30) Priority: 05.10.2010 US 898322
(71) Applicant: General Electric Company, Schenectady, NY 12345 (US)
(72) Inventor: Srivastava, Vaibhav, 500081 Hyderabad (IN); Jose, Chery, 500081 Hyderabad (IN)
(74) Representative: Bedford, Grant Richard

(57) **Abstract**

A system (200) for use in operating a wind turbine (100) is provided. The system includes a wind turbine controller (240) operatively coupled to the wind turbine and configured to transmit an exception condition and a plurality of parameters representing at least one of a configuration of the wind turbine controller and an operating condition of the wind turbine, and a controller management device (230) coupled in signal communication with the wind turbine controller and is configured to receive the exception condition and the parameters from the wind turbine controller, identify at least one correction that is associated with the exception condition, and apply the correction.

## Description

The subject matter described herein relates generally to operating wind turbines and, more particularly, to automatically addressing wind turbine exception conditions using corrections that are associated with the exception conditions.

Wind turbines utilize wind energy to generate or produce electrical power. Multiple wind turbines may be installed at a site to form a wind farm. To facilitate effective operation of a wind turbine, at least some known wind turbines include a computing device known as a controller, which is configured to monitor and/or adjust various operating aspects of the wind turbine. A controller may produce an exception condition in response to an operational issue associated with the wind turbine or the controller. The exception condition may render the wind turbine and/or the controller partially or completely inoperable.

Resolving exception conditions produced by known controllers requires human effort in the form of investigation and correction by an operator. Accordingly, an expense and a delay are associated with the resolution of each exception condition. This expense and delay are multiplied in a wind farm with many wind turbines and many controllers.

In one aspect according to the present invention, a system for use in operating a wind turbine is provided. The system includes a controller that is operatively coupled to the wind turbine and configured to transmit an exception condition and a plurality of parameters representing at least one of a configuration of the controller and an operating condition of the wind turbine. The system also includes a controller management device that is coupled in signal communication with the controller and configured to receive the exception condition and the parameters from the controller. The controller management device is further configured to identify a correction that is associated with the exception condition and to apply the correction.

In another aspect, a device for use in operating a wind turbine is provided. The device includes a memory device, a communication interface, and a processor that is coupled to the memory device and the communication interface. The memory device is configured to store a plurality of corrections, each of which is associated with an exception condition. The communication interface is configured to receive an exception condition from a first wind turbine controller of the plurality of wind turbine controllers. The processor is programmed to determine whether a correction is associated with the received exception condition within the memory device. When a correction is associated with the received exception, the processor is also programmed to apply the associated correction.

In yet another aspect, method for use in operating a wind turbine. The method includes receiving an exception condition and at least one parameter from a wind turbine controller that is operatively coupled to a wind turbine. The at least one parameter represents a configuration of the controller and/or an operating condition of a wind turbine. A correction for the received exception condition is determined by a processor based at least in part on the received exception condition and the at least one received parameter. The correction is applied by the processor.

Various aspects and embodiments of the present invention will now be described in connection with the accompanying drawings, in which:
Fig. 1 is a perspective view of an exemplary wind turbine.
Fig. 2 is a block diagram illustrating an exemplary system for use in operating one or more wind turbines, such as the wind turbine shown in Fig. 1.
Fig. 3 is a block diagram illustrating an exemplary wind turbine controller for use with the system shown in Fig. 2.
Fig. 4 is a flowchart of an exemplary method for use in operating a wind turbine using the wind turbine controller shown in Fig. 3.
Fig. 5 is a block diagram illustrating an exemplary computing device for use with the system shown in Fig. 2.
Fig. 6 is a flowchart of an exemplary method for use in operating a wind turbine using the controller management device shown in Fig. 2.
Fig. 7 is a flowchart of an exemplary method for applying a correction.
Fig. 8 is an exemplary user interface for receiving a correction from a user.

The embodiments described herein facilitate operating one or more wind turbines by automatically correcting exception conditions. As used herein, an "exception condition" is a software malfunction, a hardware malfunction, a fault, and/or any other operational anomaly associated with a wind turbine and/or a wind turbine controller.

In some embodiments, corrections are associated with exception conditions. When an exception condition arises, one or more associated corrections are applied to facilitate resolving the exception condition. A correction includes one or more operations, which may be defined in a sequence. Such operations include, without limitation, setting configuration parameters, restarting software, and/or restarting hardware.

A correction may be associated with one or more parameters provided by a wind turbine controller in addition to the exception condition. A parameter indicates a configuration and/or an operating condition of a wind turbine controller and/or a wind turbine. Accordingly, the correction selected for a particular exception condition may differ based on the parameters provided by the wind turbine controller.

Moreover, in some embodiments, if no correction is associated with an exception condition, a user is prompted to provide a correction. The provided correction may be used in response to subsequent occurrences of the exception condition. Such embodiments facilitate continually increasing the proportion of exception conditions for which automatic correction is provided.

An exemplary technical effect of certain of the methods, systems, and apparatus described herein may include at least one of: (a) receiving an exception condition and/or at least one parameter from a wind turbine controller that is operatively coupled to a wind turbine, (b) by a processor, determining a correction for the received exception condition based at least in part on the received exception condition and/or the at least one received parameter, and (c) applying the correction by the processor.

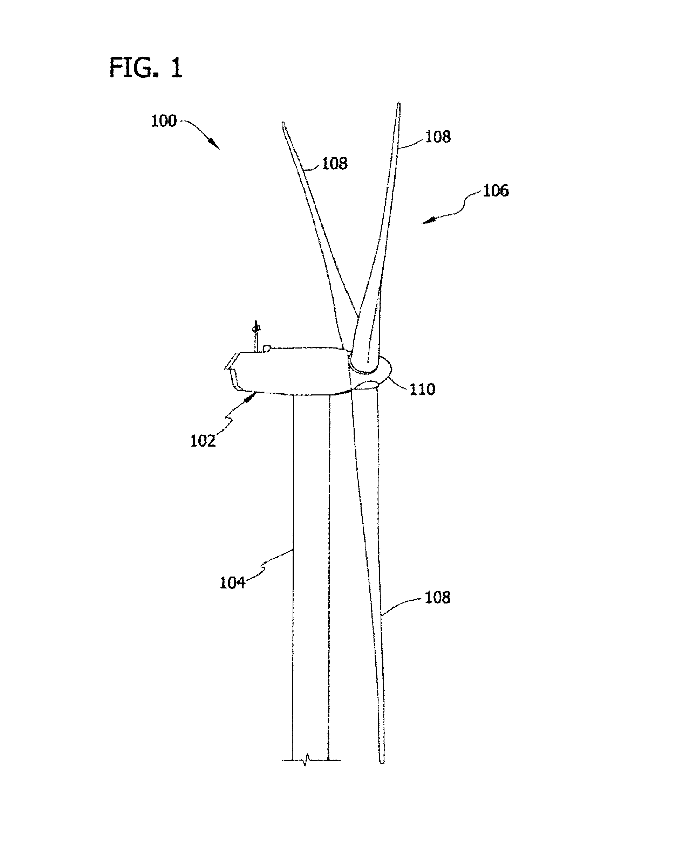

Fig. 1 is a perspective view of an exemplary wind turbine 100. Wind turbine 100 includes a nacelle 102 that houses a generator (not shown in Fig. 1). Nacelle 102 is mounted on a tower 104 (only a portion of tower 104 is shown in Fig. 1). Tower 104 may have any suitable height that facilitates operation of wind turbine 100 as described herein. In an exemplary embodiment, wind turbine 100 also includes a rotor 106 that includes three rotor blades 108 coupled to a rotating hub 110. Alternatively, wind turbine 100 may include any number of rotor blades 108 that enable operation of wind turbine 100 as described herein. In an exemplary embodiment, wind turbine 100 includes a gearbox (not shown) that is rotatingly coupled to rotor 106 and to the generator.

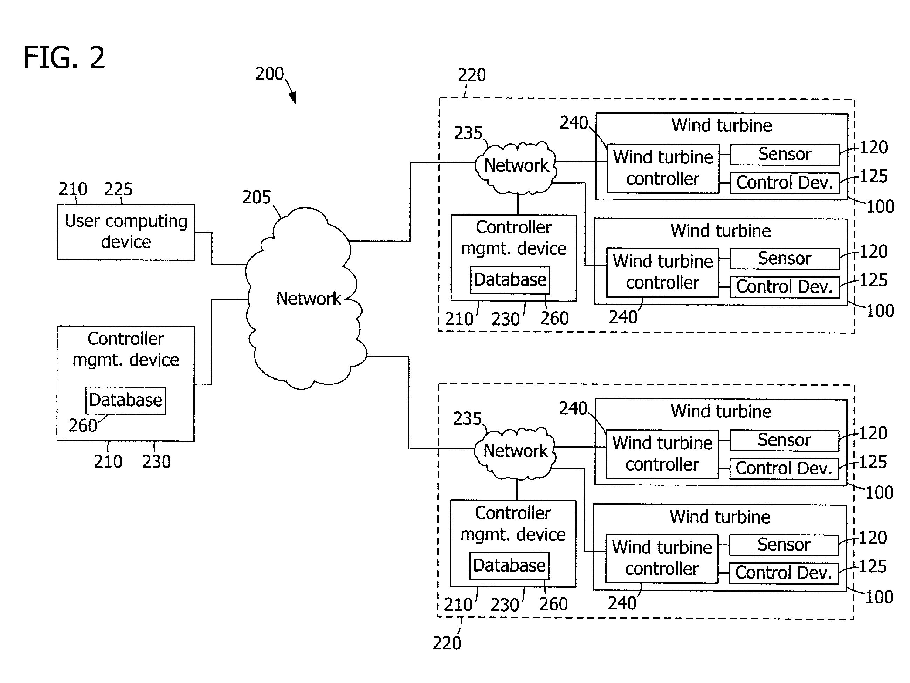

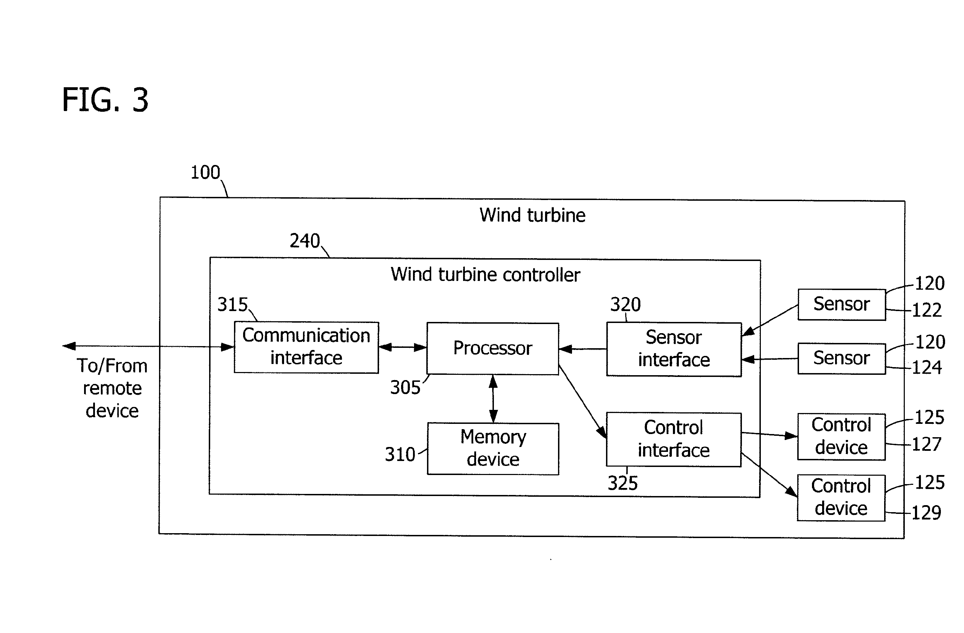

In some embodiments, wind turbine 100 includes one or more sensors 120 and/or control devices 125 (shown in Figs. 2 and 3). Sensors 120 sense or detect wind turbine operating conditions. For example, sensor(s) 120 may include a wind speed and/or a direction sensor (e.g., an anemometer), an ambient air temperature sensor, an air density sensor, an atmospheric pressure sensor, a humidity sensor, a power output sensor, a blade pitch sensor, a turbine speed sensor, a gear ratio sensor, and/or any sensor suitable for use with wind turbine 100. Each sensor 120 is located according to its function. For example, an anemometer may be positioned on an outside surface of nacelle 102, such that the anemometer is exposed to air surrounding wind turbine 100. Each sensor 120 generates and transmits one or more signals corresponding to a detected operating condition. For example, an anemometer transmits a signal indicating a wind speed and/or a wind direction. Moreover, each sensor 120 may transmit a signal continuously, periodically, or only once, for example, though other signal timings are also contemplated. Furthermore, each sensor 120 may transmit a signal either in an analog form or in a digital form.

Control devices 125 are configured to control an operation of wind turbine 100 and may include, without limitation, a brake, a relay, a motor, a solenoid, and/or a servomechanism. A control device 125 may adjust a physical configuration of wind turbine 100, such as an angle or pitch of rotor blades 108 and/or an orientation of nacelle 102 or rotor 106 with respect to tower 104.

Fig. 2 is a block diagram illustrating an exemplary system 200 for use in operating one or more wind turbines 100. System 200 includes a network 205. For example, network 205 may include, without limitation, the Internet, a local area network (LAN), a wide area network (WAN), a wireless LAN (WLAN), a mesh network, and/or a virtual private network (VPN).

One or more computing devices 210 are configured to be coupled in signal communication with devices at one or more wind turbine sites 220 via network 205. In an exemplary embodiment, a user computing device 225 and a controller management device 230 are coupled in signal communication with a site network 235 at one or more wind turbine sites 220 via network 205. In addition, or alternatively, controller management device 230 may be positioned at wind turbine site 220 and coupled in signal communication with site network 235. Wind turbine site 220 includes a plurality of wind turbines 100, and each wind turbine 100 includes a wind turbine controller 240 that is coupled in signal communication with site network 235.

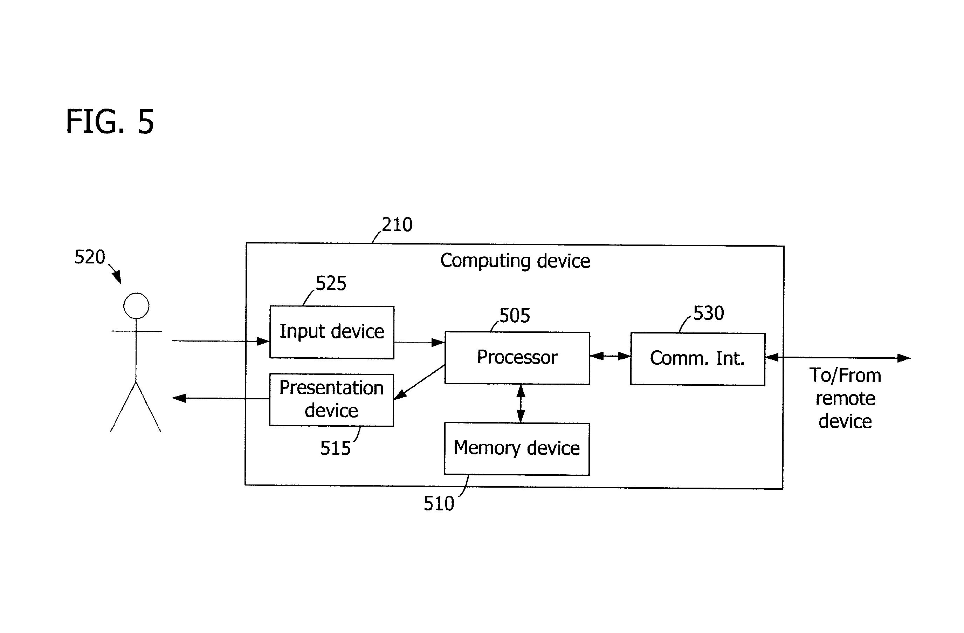

Each of user computing device 225, controller management device 230, and wind turbine controller 240 includes a processor, as shown in Figs. 3 and 5. A processor may include a processing unit, such as, without limitation, an integrated circuit (IC), an application specific integrated circuit (ASIC), a microcomputer, a programmable logic controller (PLC), and/or any other programmable circuit. A processor may include multiple processing units (e.g., in a multi-core configuration). Each of user computing device 225, controller management device 230, and wind turbine controller 240 is configurable to perform the operations described herein by programming the corresponding processor. For example, a processor may be programmed by encoding an operation as one or more executable instructions and providing the executable instructions to the processor in a memory device (also shown in Figs. 3 and 5) coupled to the processor. A memory device may include, without limitation, one or more random access memory (RAM) devices, one or more storage devices, and/or one or more computer readable media.

Fig. 3 is a block diagram illustrating an exemplary wind turbine controller 240 for use with system 200 (shown in Fig. 2). Wind turbine controller 240 includes a processor 305 for executing instructions and a memory device 310 configured to store data, such as computer-executable instructions and parameters, such as configuration parameters and/or operating parameters.

Wind turbine controller 240 also includes a communication interface 315. Communication interface 315 is configured to be coupled in signal communication with one or more computing devices 210, site network 235, and/or network 205 (shown in Fig. 2).

In some embodiments, wind turbine controller 240 includes one or more sensor interfaces 320. Sensor interface 320 is configured to be communicatively coupled to one or more sensors 120, such as a first sensor 122 and a second sensor 124, and may be configured to receive one or more signals from each sensor 120. Sensor interface 320 facilitates monitoring and/or operating wind turbine 100. For example, wind turbine controller 240 may monitor operating conditions (e.g., wind speed, rotor speed, and/or power output) of wind turbine 100 based on signals provided by sensors 120. In an exemplary embodiment, processor 305 executes one or more monitoring software applications and/or control software applications. A software application may produce one or more operating parameters that indicate an operating condition, and memory device 310 may be configured to store the operating parameters. For example, a history of operating parameters may be stored in memory device 310.

In some embodiments, optimal execution of a software application by wind turbine controller 240 requires that one or more configuration parameters be defined. For example, a software application may require an identifier (e.g., a network address) of wind turbine controller 240, sensor 120, and/or any remote device with which the software application is programmed to communicate. Accordingly, memory device 310 may be configured to store such configuration parameters. Wind turbine controller 240 may be configured to transmit parameters, such as configuration parameters and/or operating parameters, to a remote device, such as controller management device 230 or user computing device 225, via communication interface 315.

In some embodiments, wind turbine controller 240 also includes a control interface 325, which is configured to be communicatively coupled to one or more control devices 125, such as a first control device 127 and a second control device 129. In one embodiment, wind turbine control interface 325 is configured to operate control device 125 including a brake to prevent rotor 106 (shown in Fig. 1) from rotating. In addition, or in the alternative, wind turbine control interface 325 may operate a control device 125 including a blade pitch servomechanism to adjust one or more rotor blades 108 (shown in Fig. 1) to a desired and/or predetermined pitch. The brake and the blade pitch servomechanism may be operated by the same control device 125 or a first control device 125 and a second control device 125.

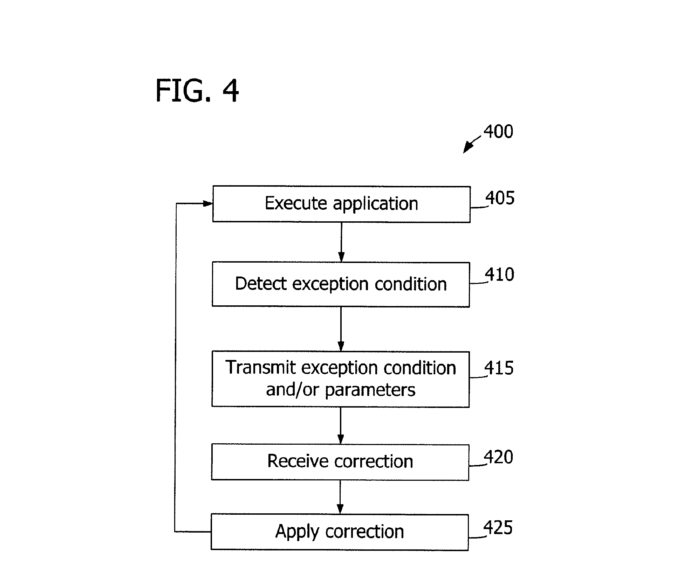

Fig. 4 is a flowchart of an exemplary method 400 for use in operating wind turbine 100 using wind turbine controller 240 (shown in Fig. 2). In an exemplary embodiment, wind turbine controller 240 executes 405 an application, such as a monitoring and/or control application. During execution 405, wind turbine controller 240 detects 410 an exception condition. For example, the exception condition may include, but is not limited to, a connection failure, an unresponsive device or application, an abnormal termination of an application, an operational fault (e.g., an overspeed condition), a controller malfunction, a wind turbine malfunction, and/or any anomaly associated with wind turbine controller 240 and/or wind turbine 100.

Wind turbine controller 240 transmits 415 the exception condition and, optionally, one or more parameters to controller management device 230 (shown in Fig. 2). The parameters transmitted 415 may include, without limitation, configuration parameters representing a configuration of wind turbine controller 240 and/or operating parameters representing an operating condition of wind turbine 100.

Wind turbine controller 240 receives 420 a correction from controller management device 230 and applies 425 the correction. For example, the correction may include one or more instructions, and wind turbine controller 240 may apply 425 the correction by executing the instructions. Wind turbine controller 240 may be configured to apply 425 the correction by operating one or more control devices 125 via control interface 325. For example, the correction may instruct wind turbine controller 240 to apply a brake and/or to adjust a rotor blade pitch.

In one embodiment, the correction includes one or more replacement configuration parameters the include a default or expected value, and wind turbine controller 240 applies 425 the correction by applying the replacement configuration parameters to a software application. For example, wind turbine controller 240 may apply an expected value from the replacement configuration parameter to a corresponding current configuration parameter. Wind turbine controller 240 optionally restarts the software application.

Configuration parameters may be received 420 as a file, a portion of a file (e.g., delta data representing a change to a file), a database update statement, structured text such as key-value pairs or an Extensible Markup Language (XML) document, and/or structured data, such as a serialized object. Further wind turbine controller 240 may receive 420 a collection of all available configuration parameters or merely one or more configuration parameters to be replaced. Wind turbine controller 240 applies 425 the configuration parameters based on the form in which the configuration parameters are received 420. For example, a file containing configuration parameters may be written to a file system of wind turbine controller 240, and a database update statement may be executed against a database executed by wind turbine controller 240.

Fig. 5 is a block diagram illustrating an exemplary computing device 210, such as user computing device 225 and/or controller management device 230, for use with system 200 (shown in Fig. 2). Computing device 210 includes a processor 505 for executing instructions. In some embodiments, executable instructions are stored in a memory device 510. Memory device 510 is any device allowing information, such as executable instructions and/or other data, to be stored and retrieved.

In some embodiments, computing device 210 includes at least one presentation device 515 for presenting information to user 520. Presentation device 515 is any component capable of conveying information to user 520. Presentation device 515 may include, without limitation, a display device (e.g., a liquid crystal display (LCD), organic light emitting diode (OLED) display, or "electronic ink" display) and/or an audio output device (e.g., a speaker or headphones). In some embodiments, presentation device 515 includes an output adapter, such as a video adapter and/or an audio adapter. An output adapter is operatively coupled to processor 505 and configured to be operatively coupled to an output device, such as a display device or an audio output device.

In some embodiments, computing device 210 includes an input device 525 for receiving input from user 520. Input device 525 may include, for example, a keyboard, a pointing device, a mouse, a stylus, a touch sensitive panel (e.g., a touch pad or a touch screen), a gyroscope, an accelerometer, a position detector, and/or an audio input device. A single component, such as a touch screen, may function as both an output device of presentation device 515 and input device 525. Computing device 210 also includes a communication interface 530, which is configured to be communicatively coupled to network 205, site network 235, one or more wind turbine controllers 240, and/or one or more other computing devices 210.

Stored in memory device 510 are, for example, computer readable instructions for providing a user interface to user 520 via presentation device 515, receiving and processing input from input device 525, and/or determining a correction for an exception condition. A user interface may include, among other possibilities, a web browser and/or a client application. Web browsers and client applications enable users, such as user 520, to display and interact with media and other information from a remote device, such as controller management device 230. Exemplary client applications include, without limitation, a software application for managing one or more wind turbines 100.

In one embodiment, computing device 210 facilitates correcting an exception condition when no correction is associated with the exception condition. Presentation device 515 is configured to prompt user 520 to provide a correction, and input device 525 is configured to receive a correction provided by user 520. Processor 505 is programmed to apply the received correction. Optionally, the received correction may be stored in memory device 510 in association with the exception condition.

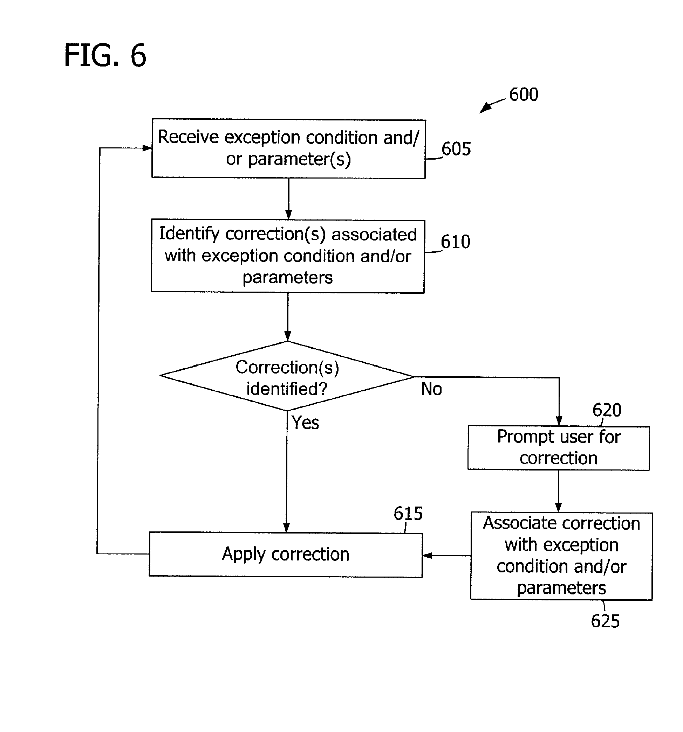

Fig. 6 is a flowchart of an exemplary method 600 for use in operating wind turbine 100 using controller management device 230 (shown in Fig. 2). Referring to Figs. 2 and 6, in an exemplary embodiment, controller management device 230 receives 605 an exception condition and/or one or more parameters from wind turbine controller 240 (e.g., via communication interface 530, shown in Fig. 5).

Controller management device 230 identifies 610 a correction, if any, that is associated with the exception condition. The correction includes one or more operations. If controller management device 230 determines that a correction has been identified 610, controller management device 230 applies 615 the identified correction. For example, controller management device 230 may execute and/or instruct wind turbine controller 240 to execute each operation in the correction.

If controller management device 230 determines that no correction has been identified 610, controller management device 230 prompts 620 a user to enter a correction for the exception condition and applies 615 the entered correction. Optionally, controller management device 230 associates 625 the entered correction with the received exception condition and/or one or more of the received parameters. Such an embodiment facilitates increasing the number of exception conditions that can be automatically corrected by controller management device 230.

In an exemplary embodiment, controller management device 230 includes a correction database 260, which may be stored in memory device 510 (shown in Fig. 5).

Correction database 260 is a relational database, hierarchical database, object oriented database, and/or any structured, searchable collection of data. Correction database 260 is configured to a plurality of corrections. A correction includes one or more operations, which may be defined as a sequence of operations. Each correction in correction database 260 is associated with one or more exception conditions. Each exception condition is associated with one or more corrections.

Controller management device 230 is configured to identify 610 a correction at least in part by querying correction database 260 to determine whether a correction is associated with the received exception condition and/or parameters. For example, an exception condition may be associated with multiple corrections, and the set of associated corrections may be narrowed by selecting only corrections that are also associated with one or more parameters corresponding to the exception condition. Further, parameters associated with a correction may be assigned a weight. Accordingly, a correction may be selected from correction database 260 based further on the assigned weights of parameters. For example, configuration parameters may be assigned a higher weight than is assigned to operating parameters. In such an example, a correction associated with a configuration parameter that matches a received parameter may be selected over a correction associated with an operating parameter that matches a received parameter.

Correction database 260 provides any matching correction(s) or an indication that no such correction exists. When a correction is associated with the received exception and/or parameters, controller management device 230 applies 615 the correction provided by correction database 260.

In some embodiments, controller management device 230 is coupled in signal communication with multiple wind turbines 100. Controller management device 230 may be configured to receive 605 exception conditions and/or parameters from each wind turbine 100 and to apply a correction for each exception condition that is associated with a correction. Further, correction database 260 may include corrections received from a remote device, such as a remote controller management device 230.

Such embodiments facilitate distributing automated corrections to a plurality of sites 220.

In some embodiments, controller management device 230 and one or more wind turbines 100 are located in a site 220, also referred to as a "wind farm." Wind turbines 100 and controller management device 230 are communicatively coupled to site network 235, and the wind farm network is communicatively coupled to network 205. In addition, or alternatively, one or more controller management devices 230 may be communicatively coupled to network 205 from a location other than a site 220. In one embodiment, one or more controller management devices 230 is communicatively coupled to network 205 from a centralized monitoring and/or control facility. Controller management device 230 communicates with another controller management device 230 and/or one or more wind turbine controllers 240 at one or more wind farms. Such an embodiment facilitates responding to exception conditions at multiple wind turbine sites 220 from one remote location.

Some embodiments facilitate automatically replacing incorrect configuration parameters with dynamically or statically defined default parameters. In one embodiment, correction database 260 stores one or more default parameters including an expected value, and controller management device 230 is configured to apply 615 the correction by providing at least one of the expected values to wind turbine controller 240.

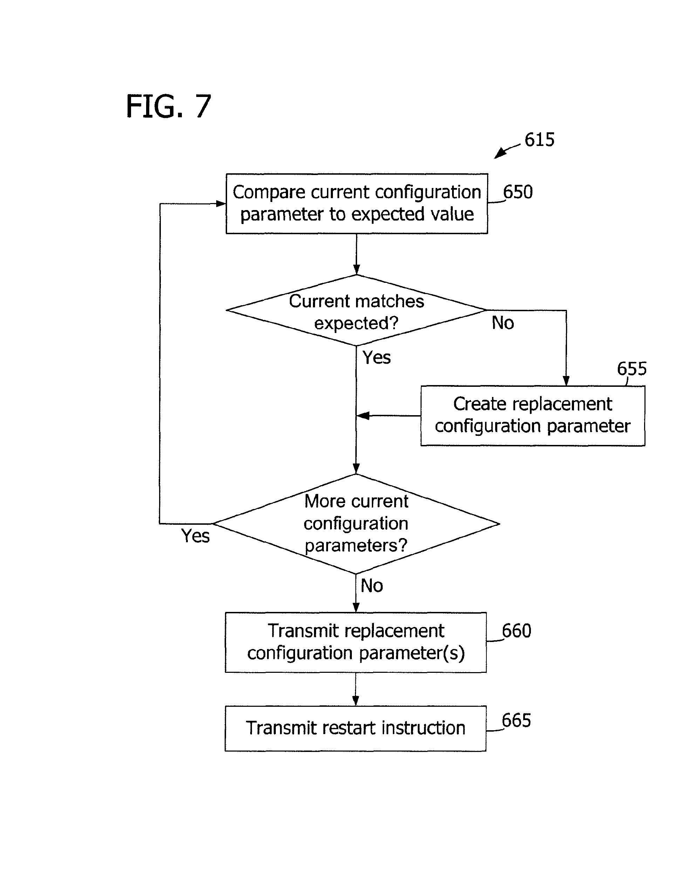

Fig. 7 is a flowchart of an exemplary method for applying 615 a correction. A current configuration parameter provided by wind turbine controller 240 (shown in Figs. 2-3) is compared 650 to an expected value. The expected value may be statically defined or dynamically defined. For example, a dynamically defined value may be determined by controller management device 230 when a correction is identified 610 (shown in Fig. 6). Dynamically defined values include, without limitation, an identifier or an address (e.g., a network address) of a device, such as sensor 120, control device 125 (both shown in Figs. 2-3), and/or a wind turbine controller 240. A replacement configuration parameter including the expected value is created 655.

Such a comparison 650 may be performed for each current configuration parameter received 605 (shown in Fig. 6) from wind turbine controller 240 to identify one or more current configuration parameters that do not match corresponding expected values.

The created replacement configuration parameters are transmitted 660 to wind turbine controller 240, indicating corrections to the current configuration parameters. In addition, an instruction directing wind turbine controller 240 to restart a software application that uses a corrected configuration parameter may be transmitted 665 to wind turbine controller 240.

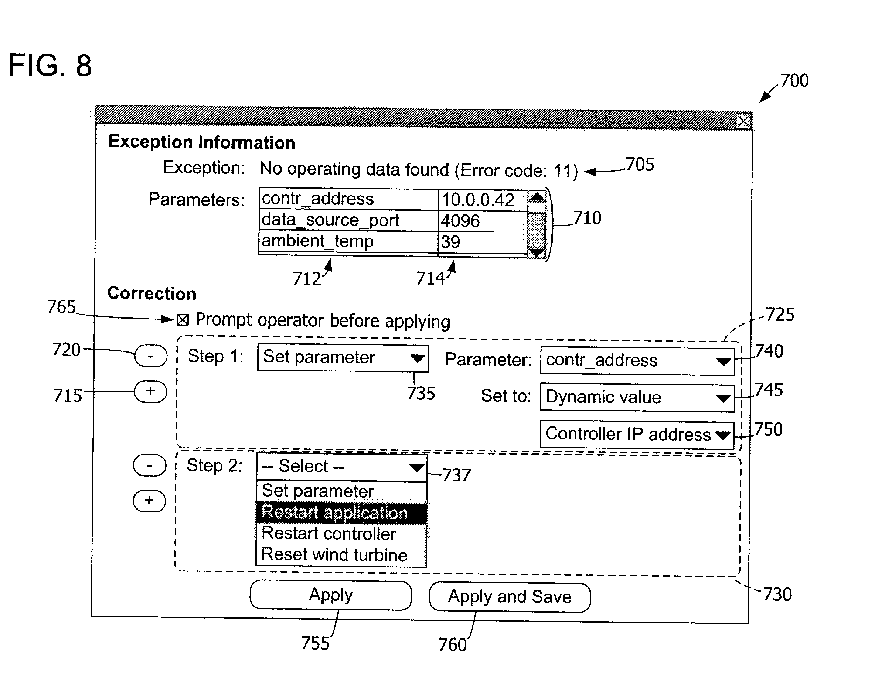

Fig. 8 is an exemplary user interface 700 for receiving a correction from a user. In an exemplary embodiment, user interface 700 is presented to user 520 via presentation device 515 and receives input from user 520 via input device 525 (all shown in Fig. 5). User interface 700 may be provided to user 520 by user computing device 225 and/or controller management device 230 (both shown in Fig. 2) when no correction is associated with a received exception condition. Alternatively, or in addition, user interface 700 may be used by user 520 to define corrections prior to an exception condition being received.

In an exemplary embodiment, user interface 700 includes an exception condition indicator 705, which displays a name, a description, and/or an identifier of an exception condition, such as an exception condition received from wind turbine controller 240 (shown in Figs. 2-3). In the exemplary embodiment, the exception condition is a lack of access to operating data at wind turbine controller 240. User interface 700 also includes a parameter list 710, which displays identifiers (e.g., names) 712 and values 714 of current parameters (e.g., configuration parameters and operating parameters) received from wind turbine controller 240.

User interface 700 facilitates accepting a correction for the indicated exception condition from user 520. In an exemplary embodiment, a correction includes one or more operations. Operations may be added via an add operation button 715 and removed via a remove operation button 720. When user 520 selects add operation button 715, user interface 700 displays an operation portion. Fig. 7 illustrates user interface 700 with a first operation portion 725 and a second operation portion 730.

First operation portion 725 includes a first operation selector 735, and second operation portion 730 includes a second operation selector 737. Operation selectors 735, 737 include a list of available operations that may be performed by controller management device 230 and/or by wind turbine controller 240. For example, the available operations may include, without limitation, setting a parameter, restarting an application, restarting wind turbine controller 240, resetting wind turbine 100 (shown in Figs. 1-3), and/or operating a control device 125 (shown in Figs. 2-3).

When user 520 selects an operation in first operation selector 735, user interface 700 may display one or more related user interface elements. In the exemplary embodiment, with an operation of "Set parameter" selected in first operation portion 725, user interface displays a parameter selector 740 and a value type selector 745.

Parameter selector 740 includes a list of parameters that may be set by controller management device 230 and/or by wind turbine controller 240. For example, parameter selector 740 may include the names of at least a portion of the current parameters displayed in parameter list 710. Value type selector 745 includes a list of types of values that may be assigned to the parameter selected in parameter selector 740. Value types may include, without limitation, an empty or null value, a static value, and/or a dynamic value.

When a static value type is selected in value type selector 745, user interface 700 may display a value field (not shown), into which user 520 may enter a value. When a dynamic value is selected, user interface 700 displays a dynamic value selector 750, which includes a list of values that may be dynamically determined by controller management device 230 and/or by wind turbine controller 240. Such values may include an identifier or an address (e.g., a network address) of a device, such as sensor 120, control device 125, and/or a wind turbine controller 240.

User interface 700 includes an apply button 755 and an apply-and-save button 760. When user 520 selects apply button 755, controller management device 230 and/or wind turbine controller 240 applies the entered correction by performing the operations specified in operation portions 725, 730. When user 520 selects apply-and-save button 760, the correction is applied, and controller management device 230 stores the correction in association with the exception condition and/or the parameters displayed in parameter list 710.

Some embodiments facilitate manual review of an exception condition prior to applying a correction. In one embodiment, user interface 700 includes a prompt operator option 765. When a correction is stored with the prompt operator option 765 selected, controller management device 230 (shown in Fig. 2) prompts a user to confirm that the correction should be applied prior to executing the operations specified in operation portions 725, 730. For example, when an exception condition is subsequently encountered, controller management device 230 may display user interface 700 with the corresponding parameters shown in parameter list 710. Operation portions 725, 730 may be displayed in a view-only mode or may allow the user to modify the correction, as described above.

In some embodiments, a set of stored corrections is presented to a user. For example, all known corrections may be displayed by associated exception conditions and/or associated parameters. When a correction is selected, controller management device 230 may display user interface 700 with the associated parameter(s) shown in parameter list 710. If user interface 700 is presented in the absence of an exception condition, apply button 755 and apply-and-save button 760 may be replaced by a save button (not shown).

Various embodiments provided herein facilitate automatically applying corrections to exception conditions associated with a wind turbine, with a site having multiple wind turbines, and/or with multiple sites. When an exception condition is identified at a wind turbine controller, a correction associated with the exception condition may be transmitted to the wind turbine controller. Moreover, a user may be prompted to enter a correction for an exception condition that has no associated correction, and the entered correction may be used to automatically correct future occurrences of the exception condition. Such embodiments allow an operator of one or more sites to increase the proportion of exception conditions which are automatically corrected over time.

The methods described herein may be encoded as executable instructions embodied in a computer readable medium including, without limitation, a memory device of a computing device. Such instructions, when executed by a processor, cause the processor to perform at least a portion of the methods described herein.

Exemplary embodiments of a wind turbine control system are described above in detail. The system, devices, wind turbine, and included assemblies are not limited to the specific embodiments described herein, but rather each component may be utilized independently and separately from other components described herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system for use in operating a wind turbine, the system comprising:
   a wind turbine controller operatively coupled to the wind turbine and configured to transmit an exception condition and a plurality of parameters representing at least one of a configuration of the wind turbine controller and an operating condition of the wind turbine; and
   a controller management device coupled in signal communication with the wind turbine controller and configured to:
      receive the exception condition and the parameters from the wind turbine controller;
      identify at least one correction that is associated with the exception condition; and
      apply the correction.
2. A system in accordance with clause 1, wherein the wind turbine controller is configured to transmit an exception condition indicating at least one of a controller malfunction and a wind turbine malfunction.
3. A system in accordance with any preceding clause, further comprising a correction database configured to store a plurality of corrections, each correction of the plurality of corrections associated with an exception condition, wherein the controller management device is configured to identify the correction at least in part by querying the correction database for a correction associated with the received exception condition.
4. A system in accordance with any preceding clause, wherein the correction database is further configured to store one or more default parameters including an expected value, and the controller management device is configured to apply the correction by providing at least one of the expected values to the wind turbine controller.
5. A system in accordance with any preceding clause, wherein the wind turbine controller is configured to transmit a plurality of configuration parameters representing a configuration of the wind turbine controller, and the controller management device is configured to apply the correction by:
   identifying a current configuration parameter that does not match an expected value stored by the controller management device; and,
   transmitting to the wind turbine controller a replacement configuration parameter including the expected value.
6. A system in accordance with any preceding clause, wherein the controller management device is configured to identify a correction that is associated with the exception condition by:
   identifying a plurality of corrections that are associated with the exception condition; and
   selecting a first correction of the plurality of corrections based on an association of the first correction with one or more of the received parameters.
7. A system in accordance with any preceding clause, wherein the controller management device is further configured to:
   determine whether a correction is associated with the received exception condition;
   when no correction is associated with the received exception condition, prompt a user to enter a correction for the exception condition; and,
   apply the entered correction.
8. A system in accordance with any preceding clause, wherein the wind turbine controller is a first controller operatively coupled to a first wind turbine, and the correction is a first correction, the system further comprising a second controller operatively coupled to a second wind turbine and coupled in signal communication with the controller management device, wherein the controller management device is further configured to:
   identify a second correction that is associated with a second exception condition received from the second controller; and,
   apply the second correction.
9. A device for use in operating a wind turbine, the device comprising:
   a memory device configured to store a plurality of corrections, each correction of the plurality of corrections associated with an exception condition;
   a communication interface configured to receive an exception condition from a first wind turbine controller of the plurality of wind turbine controllers; and,
   a processor coupled to the memory device and the communication interface, the processor programmed to:
      determine whether a correction is associated with the received exception condition within the memory device; and,
      when a correction is associated with the received exception, apply the associated correction.
10. A device in accordance with any preceding clause, wherein the communication interface is further configured to receive a plurality of parameters representing a configuration of the wind turbine controller, and the processor is further programmed to determine whether a correction is associated with the received exception condition and one or more of the received parameters.
11. A device in accordance with any preceding clause, wherein the processor is programmed to apply the correction at least in part by transmitting a replacement configuration parameter to the first wind turbine controller, the replacement configuration parameter indicating a correction to a first parameter of the received parameters.
12. A device in accordance with any preceding clause, wherein the processor is programmed to apply the correction at least in part by instructing the first wind turbine controller to restart an application that is executed by the wind turbine controller.
13. A device in accordance with any preceding clause, further comprising:
   a presentation device coupled to the processor and configured to prompt a user to provide a correction when no correction is associated with the exception condition; and,
   an input device coupled to the processor and configured to receive a correction provided by the user, wherein the processor is further programmed to apply the received correction.
14. A device in accordance with any preceding clause, wherein the memory device is further configured to store the received correction in association with the exception condition.
15. A device in accordance with any preceding clause, wherein the processor is programmed to apply the correction by executing a plurality of operations.
16. A device in accordance with any preceding clause, wherein the communication interface is further configured to receive exception conditions from a plurality of wind turbine controllers within a site.
17. A device in accordance with any preceding clause, wherein the communication interface is further configured to receive exception conditions from a plurality of wind turbine controllers within a plurality of sites.
18. A method for use in operating a wind turbine, the method including:
   receiving an exception condition and at least one parameter from a wind turbine controller that is operatively coupled to a wind turbine, the at least one parameter representing at least one of a configuration of the wind turbine controller and an operating condition of a wind turbine;
   by a processor, determining a correction for the received exception condition based at least in part on the received exception condition and the at least one received parameter; and
   applying the correction by the processor.
19. A method in accordance with any preceding clause, wherein the received parameter is a current configuration parameter representing a configuration of the wind turbine controller, and determining the correction comprises:
   comparing the current configuration parameter to an expected value corresponding to the current configuration parameter; and,
   when the current configuration parameter does not match the expected value, providing a replacement configuration parameter including the expected value.
20. A method in accordance with any preceding clause, wherein applying the correction comprises applying the expected value from the replacement configuration parameter to the current configuration parameter at the wind turbine controller.

## Claims

1. A system (200) for use in operating a wind turbine (100), the system comprising:
a wind turbine controller (240) operatively coupled to the wind turbine and configured to transmit an exception condition and a plurality of parameters representing at least one of a configuration of the wind turbine controller and an operating condition of the wind turbine; and
a controller management device (230) coupled in signal communication with the wind turbine controller and configured to:
receive the exception condition and the parameters from the wind turbine controller;
identify at least one correction that is associated with the exception condition; and
apply the correction.

2. A system (200) in accordance with claim 1, wherein the wind turbine controller (240) is configured to transmit an exception condition indicating at least one of a controller malfunction and a wind turbine malfunction.

3. A system (200) in accordance with any preceding claim, further comprising a correction database (260) configured to store a plurality of corrections, each correction of the plurality of corrections associated with an exception condition, wherein the controller management device (230) is configured to identify the correction at least in part by querying the correction database for a correction associated with the received exception condition.

4. A system (200) in accordance with claim 3, wherein the correction database (260) is further configured to store one or more default parameters including an expected value, and the controller management device (230) is configured to apply the correction by providing at least one of the expected values to the wind turbine controller (240).

5. A system (200) in accordance with any preceding claim, wherein the wind turbine controller (240) is configured to transmit a plurality of configuration parameters representing a configuration of the wind turbine controller, and the controller management device (230) is configured to apply the correction by:
identifying a current configuration parameter that does not match an expected value stored by the controller management device; and
transmitting to the wind turbine controller a replacement configuration parameter including the expected value.

6. A system (200) in accordance with any preceding claim, wherein the controller management device (230) is configured to identify a correction that is associated with the exception condition by:
identifying a plurality of corrections that are associated with the exception condition; and
selecting a first correction of the plurality of corrections based on an association of the first correction with one or more of the received parameters.

7. A system (200) in accordance with any preceding claim, wherein the controller management device (230) is further configured to:
determine whether a correction is associated with the received exception condition;
when no correction is associated with the received exception condition, prompt a user to enter a correction for the exception condition; and
apply the entered correction.

8. A system (200) in accordance with any preceding claim, wherein the wind turbine controller (240) is a first controller operatively coupled to a first wind turbine, and the correction is a first correction, the system further comprising a second controller operatively coupled to a second wind turbine and coupled in signal communication with the controller management device (230), wherein the controller management device is further configured to:
identify a second correction that is associated with a second exception condition received from the second controller; and
apply the second correction.

9. A device (125) for use in operating a wind turbine (100), the device comprising:
a memory device (310) configured to store a plurality of corrections, each correction of the plurality of corrections associated with an exception condition;
a communication interface (315) configured to receive an exception condition from a first wind turbine controller of the plurality of wind turbine controllers (240); and
a processor (305) coupled to the memory device and the communication interface, the processor programmed to:
determine whether a correction is associated with the received exception condition within the memory device; and
when a correction is associated with the received exception, apply the associated correction.

10. A device (125) in accordance with claim 9, wherein the communication interface (315) is further configured to receive a plurality of parameters representing a configuration of the wind turbine controller (240), and the processor (305) is further programmed to determine whether a correction is associated with the received exception condition and one or more of the received parameters.
